# EUROPEAN PATENT SPECIFICATION

(11) **EP 2 422 141 B1**
(45) Date of publication and mention of the grant of the patent: **05.06.2013**
(21) Application number: 10714275.4
(22) Date of filing: 19.04.2010
(51) Int. Cl.: F24F 3/14, B64D 13/06, B64D 13/08, B60H 3/02

(54) **SYSTEM AND METHOD FOR COOLING A SPACE IN A VEHICLE**
SYTEM UND VERFAHREN ZUR KÜHLUNG EINES FAHRZEUGINNENRAUMS
SYSTÈME ET PROCÉDÉ DE REFROIDISSEMENT DE L'INTÉRIEUR D'UN VÉHICULE

(30) Priority: 22.04.2009 DE 102009018401; 22.04.2009 US 171560 P
(43) Date of publication of application: 29.02.2012
(73) Proprietor: Airbus Operations GmbH, 21129 Hamburg (DE); Airbus SAS, 31707 Blagnac Cedex (FR)
(72) Inventor: BOHLEN, Carsten, F-31700 Cornebarrieu (FR); DILMAGHANI, Homayoun, F-31530 Merenvielle (FR)
(74) Representative: Maiwald Patentanwalts GmbH
(86) International application number: PCT/EP2010/055095
(87) International publication number: WO 2010/121984

(56) References cited:
- EP-A1- 1 666 803
- JP-A- 2000 117 042
- JP-A- 2001 263 726
- US-B1- 6 481 222

## Description

### TECHNICAL FIELD OF THE INVENTION

The invention relates to a system and a method for cooling a space, as well as to a vehicle with at least one space that is cooled by means of a system according to the invention and/or the method according to the invention.

### TECHNOLOGICAL BACKGROUND OF THE INVENTION

A number of different methods and devices exist for cooling spaces. Absorption-type cooling systems and compression-type cooling systems are particularly common. For example, absorption-type cooling systems that comprise an evaporator circuit for a refrigerant have prevailed for cooling road-bound and rail-bound vehicles. In today's commercial aircraft, in contrast, pneumatic air-conditioning systems with compression-type cooling systems operated with bleed air obtained from jet engines are predominantly used. Sufficiently conditioned air that suffices for air-conditioning a passenger cabin can be produced by means of compression, expansion, intermediate cooling and water separation. In modern commercial aircraft, components of a pneumatic air-conditioning system are to some extent also driven electrically.

The effort and the energy requirement for operating conventional air-conditioning systems in vehicles are significant. With respect to commercial aircraft, the efficiency of the engines is also lowered when using pneumatic air-conditioning systems that are operated with bleed air.

EP 1 666 803 A1 discloses as closest prior art a humidity controller apparatus with an adsorption rotor and a heater, which apparatus is enabled to provide a heat and moisture exchange between two air flows. A fuel cell is connected to the adsorption rotor and is adapted for making available fuel cell exhaust air for regenerating the adsorption rotor.

### SUMMARY OF THE INVENTION

Conventional air-conditioning systems for cooling spaces in vehicles are disadvantageous due to their high energy requirement. In commercial aircraft, in particular, the fuel consumption and the take-off weight are increased such that the efficiency is reduced. It is considered to be an object of the invention to provide a reliable system and a method for cooling air in a space of a vehicle, in which the energy requirement is as low as possible and the system has a low complexity, as well as a low weight.

The system according to the invention according to independent claim 1 is able to meet this object in that it provides the cooling capacity on the basis of an evaporative method, in which waste heat and released water vapor of a fuel cell are simultaneously utilized. The additional energy provided for cooling purposes can be minimized in this fashion.

Since the utilization of fuel cells is increasingly considered in modem vehicles and, in particular, commercial aircraft, the system according to the invention makes it possible to realize a symbiotic relationship between already installed fuel cells and cooling systems, in which the further use of the waste products heat and humidity leads to fuel savings.

It is advantageous if a system according to the invention according to a first embodiment features a sorption wheel, a heat exchanger, at least one humidifier unit and a fuel cell.

The sorption wheel is occasionally also referred to as "rotary dehumidifier" and consists of a device for dehumidifying an air flow by utilizing a sorbent that consists of hygroscopic materials such as silica gel, zeolites or lithium chloride deposited in a plurality of thin air ducts. If the sorption wheel is acted upon by a first air flow in a first sector, this air flow can flow through the sorption wheel, wherein water vapor is bound by the sorbent during this process and the air flow emerges from the sorption wheel with reduced humidity.

The dehumidified air is furthermore heated during this process, wherein the reasons for this can essentially be seen in the released condensation heat of the water vapor molecules, the released binding energy of the water molecules and the always slightly heated carrier mass of the sorption wheel ("entrained heat").

Since the dehumidification of the air can only be carried out up to the situation of the sorbent, it is necessary to regularly dry the sorption wheel. In order to remove the bound humidity, heated regenerating air that dehumidifies the sorbent is introduced into the sorption wheel in a second sector thereof. The regenerating air is cooled during this process and preferably discharged into the surroundings of the vehicle.

A humidifier unit is a device that conditions air flows flowing through the unit in such a way that they gain humidity. The design of a humidifier unit is not important for the system according to the invention, but spray humidifiers can preferably be utilized. These are chamber-like structures, through which the air can flow and absorb water vapor due to spray humidification. Humidifier units of this type are essentially adiabatic such that the temperature of the humidified outflowing air is lower in comparison with the inflowing air due to the constant enthalpy.

The individual components of the system according to the invention cooperate as described below. Initially, the first sector of the sorption wheel is acted upon with ambient air that flows through the sorption wheel and is dehumidified during this process. The emerging dehumidified ambient air -- in the following also referred to as process air -- has a higher temperature than the ambient air. The process air then reaches a downstream heat exchanger that lowers the temperature of the process air. The cooled process air then flows through a first humidifier unit and is humidified. The temperature of the process air is lowered once again due to this measure and preferably reaches a value that is lower than the temperature of the air in the space to be cooled.

The thusly humidified and cooled air is introduced into the space to be cooled and at least in some areas mixes with the air that is already present in this space. Due to this process, an outflow of excess space air with a higher temperature than the process air used for cooling purposes takes place at another location of the space. This excess space air is conveyed through the heat exchanger, in which it absorbs part of the heat of the dehumidified process air that previously flowed out of the sorption wheel, and discharged from the system according to the invention in the form of exhaust air.

The warm air flow used for the regeneration of the sorption wheel may be made available in the form of exhaust air of a fuel cell that is already arranged in the vehicle and serves, for example, as a replacement for a generator. Fuel cells with a relatively low temperature level of 60-80°C are well suited for use in vehicles and simultaneously provide an ideal exhaust air temperature for carrying out the regeneration process. The exhaust air of a fuel cell consequently is introduced into the second sector of the sorption wheel, absorbs humidity therein and is discharged from the sorption wheel into the surroundings of the vehicle. Due to the heat input into the sorption wheel, its carrier material is heated as briefly mentioned above.

The reason for another advantage of the system according to the invention can be seen in that many designs of fuel cells also produce water as a waste product during their operation and this water can be used for the admission flow of humidifier units. This is very advantageous, particularly in the system according to the invention, because no water at all would ideally have to be carried along separately in the vehicle.

In order to additionally increase the performance of the system according to the invention, it is possible to utilize a second humidifier unit, through which the outflowing air from the space to be cooled flows, wherein this air is humidified and cooled. This makes it possible to realize an improved heat transfer in the heat exchanger such that an even higher cooling capacity can be achieved.

In another advantageous embodiment of the system according to the invention, the exhaust air can be optionally admixed to the fuel cell exhaust air in order to facilitate an optimal regeneration temperature for the sorption wheel.

Other advantageous embodiments of the system according to the invention are disclosed in the dependent claims.

The aforementioned objective of the invention is also met by a method for cooling a space in a vehicle and the utilization of a fuel cell for operating an evaporative cooling system. The object is likewise met by a vehicle comprising at least one system according to the invention.

### BRIEF DESCRIPTION OF THE DRAWINGS

Other features, advantages and possible applications of the present invention result from the following description of exemplary embodiments and the figures. In this context, all described and/or graphically illustrated characteristics form the object of the invention individually and in arbitrary combinations, namely regardless of their composition in the individual claims or their references to other claims. In the figures, identical or similar objects are furthermore identified by the same reference symbols.
Figure 1a shows a schematic view of the system according to the invention.
Figure 1b shows a modification of the system according to the invention.
Figure 2 shows a schematic view of the system according to the invention.
Figure 3 exemplarily shows an aircraft with a system according to the invention.

### DETAILED DESCRIPTION OF EXEMPLARY EMBODIMENTS

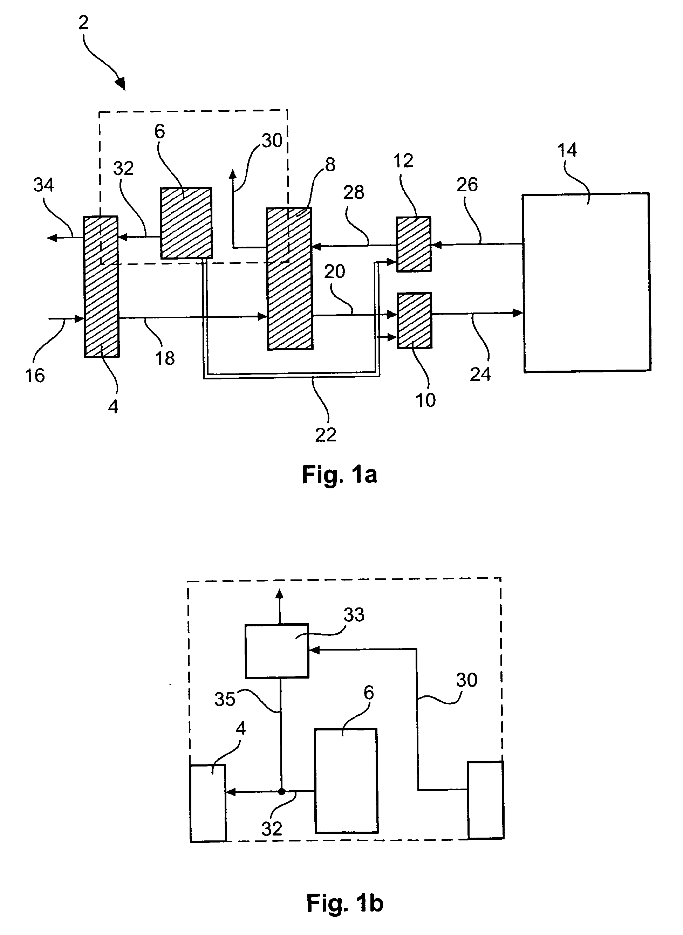

Figure 1a shows a schematic view of a system 2 according to the invention with a sorption wheel 4, a fuel cell 6, a heat exchanger 8, a first humidifier unit 10 and a second humidifier unit 12. This figure also shows a space 14 to be cooled by means of the system 2 according to the invention.

The sorption wheel 4 is acted upon with ambient air 16 that flows through a lamellar structure of the sorption wheel that is coated with a suitable sorbent. The outflowing process air 18 is dehumidified accordingly and has a higher temperature than the ambient air 16 flowing into the sorption wheel 4. The process air 18 is conveyed to the heat exchanger 8, in which it is cooled, and subsequently flows into the first humidifier unit 10 in the form of cooled process air 20.

The first humidifier unit 10 is supplied with water 22 from the fuel cell and humidifies the cooled process air 22, for example, by means of a spraying device. This process is nearly adiabatic such that the temperature of the cooling air 24 flowing out of the first humidifier unit 10 has a lower temperature than the cooled process air 22. The cooling air is subsequently conveyed into the space 14 to be cooled, in which it mixes with warmer air and causes an air cooling.

Since the space 14 has a limited volume, space exhaust air 26 flows out of the space 14 and is , for example, conveyed into the second humidifier unit 12 such that the temperature of the space exhaust air 26 is lowered, but its humidity is increased. The humidified space exhaust air 28 is conveyed into the heat exchanger such that it can at least absorb part of the heat of the process air 18 in order to additionally lower the temperature thereof and subsequently can flow from the heat exchanger 8 into the surroundings in the form of exhaust air 30.

On the left side of the drawing, it furthermore becomes clear that fuel cell exhaust air 32 flows from the fuel cell 6 into the sorption wheel 4 for regeneration purposes such that the humidity bound in the sorbent is withdrawn again. A continuous rotation of the sorption wheel 4 makes it possible to carry out a continuous dehumidification of the ambient air 16 because the ambient air 16 always flows over sufficiently dried and therefore absorptive sorbent. Furthermore, used regeneration air 34 flows out of the sorption wheel 4.

In order to facilitate an optimal regeneration temperature for the sorption wheel 4, the exhaust air 30 from the heat exchanger 8 could be optionally admixed to the fuel cell exhaust air 32 in the form of additional air 35 by means of a valve 33 that is illustrated in the form of a block in Figure 1b. This could be advantageous in instances, in which the fuel cell exhaust air 32 is excessively high or excessively low and the exhaust air 30 from the heat exchanger 8 has a corresponding temperature that is suitable for reaching an optimal regeneration temperature of the mixed regeneration air flowing into the sorption wheel 4.

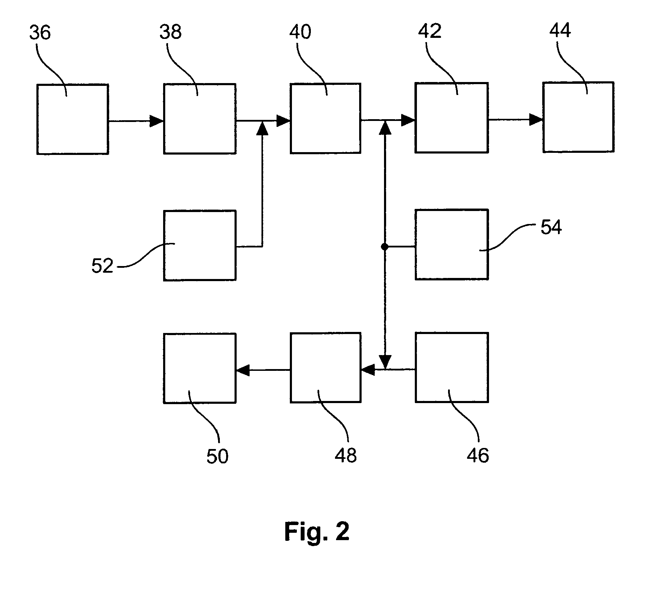

The method according to the invention can be described in greater detail with reference to Figure 2. After the introduction 36 of ambient air 16, this ambient air is dried 38 in the sorption wheel 4, cooled 40 by means of the heat exchanger 8, humidified again 42 in the first humidifier unit 10 and conveyed 44 into the space 4. The space exhaust air 26 is humidified 46 in the second humidifier unit 12 and heated 48 by means of the heat exchanger 8. It is subsequently discharged 50 into the surroundings in the form of exhaust air 30. Fuel cell exhaust air 32 is used parallel thereto for regenerating 52 the sorption wheel 4 while accumulating water 54 is conveyed into the first humidifier unit 10 and into the second humidifier unit 12.

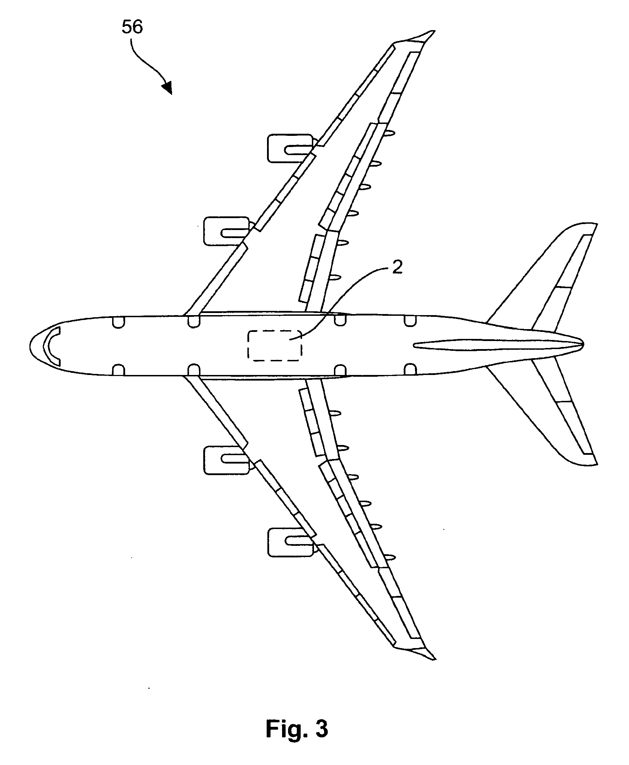

Figure 3 exemplarily shows an aircraft 56 that is equipped with at least one system 2 according to the invention.

At this point, it should be noted that the term "sorption wheel" is representative for all means, with the aid of which a sorbent can be rendered technically usable in a continuous process. Sorption wheels currently represent the technical optimum that could be displaced by other technical solutions within a few years. The invention is not limited to the utilization of sorption wheels, but can also be realized with other air-drying devices.

As a supplement, it should be noted that "comprising" and "featuring" do not exclude other elements or steps, and that "an" or "a" does not exclude a plurality. Reference symbols in the claims should not be interpreted in a restrictive sense.

### REFERENCE SYMBOLS

| | |
|---|---|
| 2 | System according to the invention |
| 4 | Sorption wheel |
| 6 | Fuel cell |
| 8 | Heat exchanger |
| 10 | First humidifier unit |
| 12 | Second humidifier unit |
| 14 | Space |
| 16 | Ambient air |
| 18 | Process air |
| 20 | Cooled process air |
| 22 | Water |
| 24 | Cooling air |
| 26 | Space exhaust air |
| 28 | Humidified space exhaust air |
| 30 | Exhaust air |
| 32 | Fuel cell exhaust air |
| 33 | Valve |
| 34 | Used regeneration air |
| 35 | Additional air |
| 36 | Introduction of ambient air |
| 38 | Drying of ambient air |
| 40 | Cooling of process air |
| 42 | Humidification of cooled process air |
| 44 | Introduction into space |
| 46 | Humidification of space exhaust air |
| 48 | Cooling of humidified space exhaust air |
| 50 | Discharge into surroundings |
| 52 | Regeneration of sorption wheel |
| 54 | Conveyance of water into humidifier units |
| 56 | Aircraft |

## Claims

1. A system for cooling a space in a vehicle, comprising
- a sorption wheel (4),
- at least one heat exchanger (8),
- at least a first humidifier unit (10) and
- at least one fuel cell (6),
wherein the sorption wheel (4) is adapted for drying ambient air (16) and for conveying dried process air (18) to the downstream heat exchanger (8) and the heat exchanger (8) is adapted for cooling process air (18), with the heat exchanger (8) being connected to the first humidifier unit (10) for humidifying cooled process air (20), and
wherein the fuel cell (6) is connected to the sorption wheel (4) and to the first humidifier unit (10) and is adapted for making available fuel cell exhaust air (32) for regenerating the sorption wheel (4) and water (22) to be introduced into the first humidifier unit (10).

2. The system of claim 1, comprising at least a second humidifier unit (12) that is connected to the space (14) in order to receive and humidify space exhaust air (26) and to the fuel cell (6) in order to receive water (22) therefrom.

3. The system of claim 1 or 2, wherein the heat exchanger (8) is adapted for transferring heat of the process air (18) from the sorption wheel (4) to the space exhaust air (26, 28).

4. The system of one of the preceding claims, wherein the fuel cell (6) is a low-temperature fuel cell.

5. The system of one of the preceding claims, furthermore comprising a valve (33) for optionally mixing exhaust air (30) from the heat exchanger (8) and the fuel cell exhaust air (32) for regenerating the sorption wheel (4).

6. A method for cooling a space in a vehicle, comprising the steps:
- introduction (36) of ambient air (16) into a sorption wheel (4) and subsequent drying (30) by means of the sorption wheel,
- cooling (40) the air by means of a heat exchanger (8),
- humidifying (42) the air by means of a first humidifier unit (12) with water (22) from a fuel cell (6),
- introducing the air into the space (4),
- heating space exhaust air (28) by means of the heat exchanger (8) and discharging (50) it into the surroundings,
- regeneration (52) of the sorption wheel (4) by means of fuel cell exhaust air (32) of a fuel cell (6) and conveyance (54) of water (22) from the fuel cell (6) into the first humidifier unit (10).

7. The method of claim 6, additionally comprising the steps
- conveyance (54) of water (22) from the fuel cell (6) into a second humidifier unit (12) and
- humidifying space exhaust air (28) by means of the second humidifier unit (12).

8. The use of an evaporative cooling system with a fuel cell (6) as heat source for regenerating a sorption wheel (4) and as a water source for supplying at least a first humidifier unit (10) with water for humidifying air.

9. A vehicle comprising at least one space and at least one system according to one of claims 1 to 5.

10. The vehicle of claim 9 realized in the form of an aircraft.

## Patentansprüche

1. System zum Kühlen eines Raums in einem Fahrzeug, aufweisend
- ein Sorptionsrad (4),
- mindestens einen Wärmetauscher (8),
- mindestens eine ersten Befeuchtungseinheit (10) und
- mindestens eine Brennstoffzelle (6),
wobei das Sorptionsrad (4) zum Trocknen von Umgebungsluft (16) und zum Leiten einer trockenen Prozessluft (18) an den nachgeschalteten Wärmetauscher (8) eingerichtet ist und der Wärmetauscher (8) zum Kühlen von Prozessluft (18) eingerichtet ist, der Wärmetauscher (8) mit der ersten Befeuchtungseinheit (10) zum Befeuchten gekühlter Prozessluft (20) verbunden ist und
wobei die Brennstoffzelle (6) mit dem Sorptionsrad (4) und der ersten Befeuchtungseinheit (10) verbunden ist und dazu eingerichtet ist, Brennstoffzellenabluft (32) zum Regenerieren des Sorptionsrades (4) und Wasser (22) zum Einleiten in die erste Befeuchtungseinheit (10) bereitzustellen.

2. System nach Anspruch 1, aufweisend mindestens eine zweite Befeuchtungseinheit (12), die mit dem Raum (14) zum Aufnehmen und Befeuchten von Raumabluft (26) und mit der Brennstoffzelle (6) zum Aufnehmen von Wasser (22) verbunden ist.

3. System nach Anspruch 1 oder 2, wobei der Wärmetauscher (8) dazu eingerichtet ist, Wärme von der Prozessluft (18) aus dem Sorptionsrad (4) an die Raumabluft (26, 28) zu übertragen.

4. System nach einem der vorhergehenden Ansprüche, wobei die Brennstoffzelle (6) eine Niedertemperatur-Brennstoffzelle ist.

5. System nach einem der vorhergehenden Ansprüche, ferner aufweisend ein Ventil (33) zum wahlweisen Mischen von Abluft (30) aus dem Wärmetauscher (8) und der Brennstoffzellenabluft (32) zum Regenerieren des Sorptionsrades (4).

6. Verfahren zum Kühlen eines Raums in einem Fahrzeug, aufweisend die Schritte:
- Einleiten (36) von Umgebungsluft (16) in ein Sorptionsrad (4) und anschließendes Trocknen (38) mittels des Sorptionsrades,
- Kühlen (40) der Luft mittels eines Wärmetauschers (8),
- Befeuchten (42) der Luft mittels einer ersten Befeuchtungseinheit (12) mit Wasser aus einer Brennstoffzelle (6),
- Einleiten der Luft in den Raum (4),
- Erwärmen von Raumabluft (28) mittels des Wärmetauschers (8) und Ausleiten (50) der Luft in die Umgebung,
- Regenerieren (52) des Sorptionsrades (4) mittels Brennstoffzellenabluft (32) einer Brennstoffzelle (6) und Leiten (54) von Wasser (22) von der Brennstoffzelle (6) in die erste Befeuchtungseinheit (10).

7. Verfahren nach Anspruch 6, zusätzlich aufweisend die Schritte
- Leiten (54) von Wasser (22) aus der Brennstoffzelle (6) in eine zweite Befeuchtungseinheit (12) und
- Befeuchten von Raumabluft (28) mittels der zweiten Befeuchtungseinheit (12).

8. Verwendung eines evaporativen Kühlsystems mit einer Brennstoffzelle (6) als Wärmequelle zur Regeneration eines Sorptionsrads (4) und als Wasserquelle zum Beliefern mindestens einer ersten Befeuchtungseinheit (10) mit Wasser zum Befeuchten von Luft.

9. Fahrzeug, aufweisend mindestens einen Raum und mindestens ein System nach einem der Ansprüche 1 bis 5.

10. Fahrzeug nach Anspruch 9, das als Flugzeug ausgeführt ist.

## Revendications

1. Système pour refroidir un espace dans un véhicule, comprenant:
une roue de sorption (4),
au moins un échangeur de chaleur (8),
au moins une première unité d'humidification (10) et
au moins une pile à combustible (6),
dans lequel la roue de sorption (4) est apte à sécher l'air ambiant (16) et à transporter de l'air de traitement séché (18) vers l'échangeur de chaleur aval (8), et l'échangeur de chaleur (8) étant apte à refroidir un air de traitement (18), avec l'échangeur de chaleur (8) qui est relié à la première unité d'humidification (10) pour humidifier l'air de traitement refroidi (20), et
dans lequel la pile à combustible (6) est reliée à la roue de sorption (4) et à la première unité d'humidification (10) et est apte à réaliser un air d'échappement de pile à combustible disponible (32) pour régénérer la roue de sorption (4) et l'eau (22) devant être introduite dans la première unité d'humidification (10).

2. Système selon la revendication 1, comprenant au moins une seconde unité d'humidification (12) qui est reliée à l'espace (14) afin de recevoir et d'humidifier l'air d'échappement (26) de l'espace et à la pile à combustible (6) afin d'en recevoir de l'eau (22).

3. Système selon la revendication 1 ou 2, dans lequel l'échangeur de chaleur (8) est apte à transférer la chaleur de l'air de traitement (18) de la roue de sorption (4) à l'air d'échappement (26, 28) de l'espace.

4. Système selon l'une des revendications précédentes, dans lequel la pile à combustible (6) est une pile à combustible basse température.

5. Système selon l'une des revendications précédentes, comprenant en outre une soupape (33) pour mélanger de manière optionnelle l'air d'échappement (30) provenant de l'échangeur de chaleur (8) et l'air d'échappement de la pile à combustible (32) pour régénérer la roue de sorption (4).

6. Procédé pour refroidir un espace dans un véhicule, comprenant les étapes de :
introduction (36) d'air ambiant (16) dans une roue de sorption (4) et séchage (30) ultérieur au moyen de la roue de sorption,
refroidissement (40) de l'air au moyen d'un échangeur de chaleur (8),
humidification (42) de l'air au moyen d'une première unité d'humidification (12) avec de l'eau (22) provenant d'une pile à combustible (6),
introduction de l'air dans l'espace (4),
chauffage de l'air d'échappement (28) de l'espace au moyen de l'échangeur de chaleur (8) et déchargement (50) de ce dernier dans les environs,
régénération (52) de la roue de sorption (4) au moyen d'air d'échappement de pile à combustible (32) d'une pile à combustible (6) et acheminement (54) d'eau (22) de la pile à combustible (6) à la première unité d'humidification (10).

7. Procédé selon la revendication 6, comprenant en outre les étapes de :
acheminement (54) d'eau (22) de la pile à combustible (6) à une seconde unité d'humidification (12) et
humidification de l'air d'échappement (28) de l'espace au moyen de la seconde unité d'humidification (12).

8. Utilisation d'un système de refroidissement par évaporation avec une pile à combustible (6) comme source de chaleur pour la régénération d'une roue de sorption (4) et comme source d'eau pour alimenter en eau au moins une première unité d'humidification (10) pour humidifier l'air.

9. Véhicule comprenant au moins un espace et au moins un système selon l'une des revendications 1 à 5.

10. Véhicule selon la revendication 9 réalisé sous la forme d'un aéronef.
